# EUROPEAN PATENT APPLICATION

(11) **EP 4 372 704 A1**
(43) Date of publication of application: **22.05.2024**
(21) Application number: 22841545.1
(22) Date of filing: 12.07.2022
(51) Int. Cl.: G07D 11/00

(54) **METHOD AND DEVICE FOR TRANSPORTING BANKNOTES AND DOCUMENTS AUTOMATICALLY BY PNEUMATIC MEANS**

(30) Priority: 14.07.2021 ES 202130663
(71) Applicant: Boxiana Corporation, Sociedad Limitada de Nacionalidad Liberiense, Monrovia (LR)
(72) Inventor: LÓPEZ JIMENEZ, Miguel, 28700 San Sebastian de los Reyes - Madrid (ES)
(74) Representative: Lahidalga de Careaga, Jose Luis
(86) International application number: PCT/ES2022/070447
(87) International publication number: WO 2023/285718

(57) **Abstract**

The invention relates to a method and device for transporting banknotes and documents automatically by pneumatic means, the device being characterised in that it can consist of the following elements: -(A).- A banknote filling station, consisting of a storage container (1) where all the banknotes (3) to be transported are collected. -(B).- A mobile container, consisting of a cylindrical body (10) with straight inner walls and concave-convex-concave outer walls, where the inside of the body (10) is provided with a lower lid (14), with air inlets (17), and a vertical shaft (12) at the centre bearing on the lower lid (14) and equipped with an upper stop (13), along which a mobile cylindrical piston (15) travels. - (C).- A pneumatic circuit, consisting of a rigid pipe (20) that connects the filling station (A) to the receiving safe (F). -(D).- A distributor, consisting of a fixed cylindrical body (31), which contains another mobile cylindrical body (30) divided into four independent inner bodies but with pressure/suction outlet/inlet to the pneumatic circuit (C). -(E).- A compressed-air turbine. -(F).- A receiving safe. -(G).- An electronic control circuit that configures the movement and control of all the elements of the apparatus.

## Description

### OBJECT OF THE INVENTION

The present invention relates to a procedure and device for the automatic transport of banknotes and documents by pneumatic means, consisting of a device for transporting a specific container containing the banknotes and/or documents to be transported from the place of storage, such as a cash register of a retail establishment, to a safe place, such as a safe deposit box, with the particularity of emptying the contents of the said container unattended and returning it to the origin where it will be again ready to receive new banknotes and/or documents, The contents of the container can be emptied unattended and returned to its origin, where it will be ready to receive a new quantity of banknotes, and the cycle can be repeated indefinitely and always with absolute control and security in the shipments.

### FIELD OF APPLICATION OF THE INVENTION

The field of the invention corresponds to the auxiliary industry of banknote and document handling machines and devices.

### BACKGROUND OF THE INVENTION

There are different remote antecedents on banknote storage and transport devices.

Within the cash management industry, at this time, several pro-cedures are in use. In total, the generic patent family contains more than 12,000 documents. Among them we have highlighted the following that can be considered closest to the advocated invention.

Patent P202031078, for "Procedure and device for transporting banknotes and documents". In favor of Miguel López Jiménez, Hart Automation S.L.

Priority October 28, 2020, Pending.

In short, it deals with the specific way of introducing banknotes unattended in a container transferring the data of the deposited content by contactless means and leaving it ready to be transported by conventional means.

The present invention proposes a set of specific means for transporting the said container to complete the cycle of secure transport of banknotes contained in said container to a secure place, guaranteeing the delivery of their contents at destination by unattended computer means.

The present invention could be considered as a continuation of the cited patent in case the banknote container were coincident with the one advocated by said patent, but it would maintain its inventive capacity regardless of the type of container used.

Patent US410585, for "Money management device and its dispensing method", (Money management device and its dispensing method). In favor of Kazuhiro Doi Glory Ltd.

Priority 2009-03-25 - Filed 2010-03-24 - Granted 2018-05-11 - Published 2018-05-11
In brief it is a money handling device, comprising: a de-deposit unit (11) which deposits money; a transport unit (16) which transports money; a recognition unit (12) which recognizes money; a money storage unit (21) which stores money; a dispensing unit (13) which dispenses money.

Studied in depth the invention, although it consists of similar parts as may be a deposit unit, a storage unit, and a dispensing unit; none of the above mentioned units functions as the referents of the claimed invention.

The transport of the banknotes is carried out in containers that are transported on a yearly basis, a detail of great technical importance in terms of differentiation, and also the storage is carried out in rectangular containers with the flat banknotes up to the transport module that is reflected as conventional.

In view of the above, this document cannot be considered as an antecedent that may affect the novelty or inventive step of the invention advocated.

Patent JP 413088 for "Bill storage and discharge device and bill transport device" "Bill storage and discharge device and bill transport device".

Priority 2002-10-03 - Filed 2002-10-03 - Granted 2008-08-06 - Published 2008-08-06
Briefly disclosed are a reel that winds/rewinds the bill, a first roller that rotates in contact with the bill that is wound/rewound by the reel, and a bill that is rotated by the first roller in a short lateral direction from the outside of the apparatus. A reel for winding/rewinding banknotes to be transported.

It performs a function similar to that advocated in the cited USA patent, although the device for receiving and handling the banknotes is totally different, since it involves reels for direct winding of banknotes by external means and storage in flat containers, so that it is not an antecedent that can be considered relevant since, as in the previous case, the transport is carried out with human intervention contrary to what is advocated by the present invention in which the transport of the banknotes from the receiving module to their secure destination is carried out without manual intervention.

The inventor does not know of any similar device on the recommended invention which could be considered as a remarkable prior art.

### EXPLANATION OF THE INVENTION

The device which the invention proposes incorporates, a plurality of novel features in relation to other elements used within the sector and which solves problems which had not hitherto arisen.

The overall objective of the invention is to provide a solution that allows the banknotes collected in retail distribution centers, as a result of cash sales, to be transferred to a security zone without any human intervention, so that not only are they physically transferred, but also the actual content of all the banknotes transferred can be guaranteed by computer, including not only the list of the banknotes delivered, but also their serial numbers.

In this way, none of the persons in charge of the cashier's stations, nor the supervisors of the establishment can be held responsible for unwanted losses, or be susceptible to theft or intimidation during the transport of funds from their station to the safe place of temporary storage until their collection by the cash-in-transit company.

If already de facto the release of the responsibility of the employees is a great saving both financially and otherwise, however, one of the greatest advantages of the implementation of the proposed procedure is that the cash-in-transit company can give "value date" to the establishment once the cash has been deposited in "its safe" so that at those times when the interest is high, this is a great advantage for the establishment.

On the other hand, this is also a great advantage for the cash-in-transit company, since, having the cash in "their safe", they can organize the pick-ups in an optimized way, which is also a great saving for them.

Given the great historical experience with pneumatic means of transport and the fact that the distances between the collection points and the safe place to transport the banknotes can be long, we have considered the use of this system as the preferred mode of transport.

Thus, on the one hand, the banknote container can hold either rolled or flat banknotes, but in any case the container must be suitable for transport by unattended means of transport.

These containers may, depending on the case, contain an electronic memory element (contactless chip) that will allow them to receive information on the contents from the equipment of origin and transfer this information at the time of unattended emptying at the secure place of destination.

For this purpose, the cash receiving equipment (at the cash desk, regardless of whether it has received the cash directly from the customer or whether the customer has handed it over to the cash operator for delivery to the receiving equipment) will transfer the banknotes and the information related to them to the container in which they will travel to the secure location.

In the case where the banknotes travel half-rolled, the filling procedure may have been performed as specified in Patent P202031078 above.

In the present invention, there is further advocated a mode of transporting the stacked banknotes within a container of suitable shape to be transported preferably by pneumatic means.

This method is intended so that the banknotes can be delivered to their destination in such a way that they can be automatically processed and evaluated without the possibility of human intervention upon arrival at the secure location and form a neatly stacked and properly protected bundle of banknotes.

In the case of stacked banknotes, it would be possible that prior to delivery to the safe, but equally protected, the banknotes are checked and evaluated before being introduced into the safe by means of a suitable receiving mechanism. In this case it would be possible to grant "value date" even if the containers had been filled (originally without receiving equipment) by hand by employees of the establishment, since before entering the safe they would have been previously valued.

The present invention on the one hand advocates the procedure which allows the bills received in the various Self-Payment machines in commercial establishments to be conveyed without any human intervention to a safe place (Armored Safe located at a distance), where they will remain until the cash-in-transit company comes to pick them up.

On the other hand, the devices and methods that allow this procedure to be carried out as recommended are described.

### DESCRIPTION OF THE DRAWINGS

In order to complement the description being made and with the purpose of helping to a better understanding of the characteristics of the invention, three sheets of drawings are attached to the present descriptive memory, as an integral part of the same, in which with identical references identical elements are indicated and where, with illustrative and not limiting character, the following has been represented:
FIGURE Nº 1.
   Section view of the mobile container.
FIGURE Nº 2.
   Schematic view of the complete system.
FIGURE Nº 3.
   Section view of the distributor.

And in these figures the same elements are identified with identical numbering:
(A). - filling station,
(1). - banknote magazine,
(2), - banknote filling cone,
(3). - banknotes,
(B). - mobile container,
(10). - container body,
(11). - rubber rings,
(12). - shaft,
(13). - upper shaft stop,
(14). - lower container cover,
(15). - movable cylinder,
(16).- circular notches,
(17).- air inlets
(C). - pneumatic circuit,
(21). - container arrival sensor,
(22). - container exit sensor, (23),
(23).- container arrival/exit sensor at the distributor (D),
(24).- banknote discharge sensor,
(25).- second circuit,
(D).- distributor,
(30).- inner rotating body,
(31).- distributor body,
(32).- rotating shaft of the inner part,
(33).- inlet/outlet to the distributor,
(34).- suction inlet inlet,
(35).- compressed air pressure intake inlet,
(36).- turning motor,
(E).- compressed air turbine,
(41).- suction port outlet,
(42).- suction pipe,
(43).- pressure intake outlet, (44),
(44).- pressure pipe,
(F).- safe receiver,
(G).- electronic control circuit,
(51).- connection to computer network,
(52).- connection with equipment,
(60).- circular inlet,

### PREFERRED EMBODIMENT OF THE INVENTION

The device which the invention proposes, incorporates novel features in relation to other elements used within the sector and which solves problems which up to now were complicated to solve.

More precisely, the recommended patent refers to a method and a device for transporting banknotes and documents automatically by pneumatic means, consisting of a device that allows transporting a specific container containing the banknotes and/or documents to be transported from the place of storage, The contents of the container can be emptied unattended and returned to its origin, where it will be ready to receive a new quantity of banknotes, and the cycle can be repeated indefinitely and always with absolute control and security in the shipments.

In a preferred embodiment, the device consists of the following elements:
(A).- Banknote filling station.

Said station (A) consists of a storage container (1) where all the banknotes (3) to be transported to a safe place are collected, preferably with a filling ramp (2) in the shape of an inverted truncated cone so that the banknotes (3) can be more easily inserted.

(B) - Mobile container.

The mobile container (B) consists of a cylindrical body (10) with straight inner walls and concave-convex-concave outer walls, where at the outer ends of the concave areas there are circular notches (16) that house two rings of sliding material (11).

On the inside of the body (10) there is a lower cover (14), with air inlets (17) and in the center there is a vertical axis (12) supported on the lower cover (14) and provided with an upper stop (13), through which a movable cylindrical piston (15) can move longitudinally from end to end, finding its limits in the lower cover (14) and in the upper stop (13). This piston generates sealing against the walls and the vertical axis.

The cylindrical body (10) is completely open on its upper part, the entrance and delivery area of the bills (3) while on its opposite part it is closed by the lower cover (14) closed, but with air inlets (17) that allow the free circulation of air.

(C) - Pneumatic circuit.

The pneumatic circuit itself consists of a rigid pipe (20) that connects the filling station (A) with the receiving safe (F). The mobile container (B) runs inside it and it also has several movement sensors, which from the filling station are:
- container arrival sensor (21).
- Container departure sensor (22).
- arrival/exit sensor at the distributor (23).
- bill unloading sensor (24).

There may be a second parallel circuit (25).

(D).- Distributor.

The distributor, whose function is to handle the mobile container (B) by means of air pressure/suction, is constituted by a fixed cylindrical body (31), which contains another mobile cylindrical body (30) divided into four independent inner bodies but with pressure/suction outlet/inlet to the pneumatic circuit (C) which rotates by a common axis (32) and in whose outer cylindrical part the following elements can be seen:
- Inlet/outlet of the mobile container (B) (33).
- Inlet of the suction inlet (34).
- Air pressure inlet (35).
- An electric motor (36) that will be used for the rotation and positioning of the mobile cylindrical body (30).

(E) - Compressed air turbine.

The compressed air turbine (E) is a conventional compressed air generation device that, depending on the need, expels under pressure or sucks under pressure.

In relation to the work to be carried out in this case it has the following elements:
- suction outlet (41).
   - Suction pipe (42).
   - pressure outlet (43).
   - Pressure pipe (44).

(F) - Receiving safe.

It is a conventional safe that has a circular inlet (60) where the end of the pneumatic circuit rests and through which the banknotes (3) transported by the mobile container (B) from the filling station (A) will enter.

(G).- Electronic control circuit

The electronic control circuit (G) configures the movement and control of all the elements of the equipment by means of two wireless connections:
- connection with a bi-directional computer network (51) and.
- connection with all the control elements of the equipment (52).

The procedure and operation of the equipment is as follows:
The banknotes (3) contained in the magazine (1) of the filling unit (A) pass into the mobile container (B) by means of the filling ramp (2), which due to its inverted truncated cone shape causes the banknotes to wrap around the axis of the container (B) filling it.

In this situation, the piston (15) of the container (B) is at its lowest point, glued to the lower lid (14) and achieving the sealing inside the container (B), being the rest of the inner cylindrical surface with the banknotes (3) to be transported. When the container (B) is ready for dispatch, the electronic control circuit (G) receives a signal from the filling ramp (2) and gives the order to activate the pneumatic circuit (C) which activates the circulation of pressurized air pushing the mobile container (B) through the same until it reaches the dispenser.

The pneumatic device moves inside the device due to the air thrust, since it is sealed on the inside by the cylinder (15) that closes the inlets (17) of the cover (14) and on the outside, the sliding rings (11) in contact with the walls of the pneumatic circuit provide adequate sealing.

In these conditions the container (B) is ready to travel through the pneumatic circuit (C) in the direction of its closed side at the front until it reaches the inlet/outlet (33) of the distributor (D).

The distributor (D) is intended to handle the container (B) so that it can deposit the banknotes (3) contained therein in the receiving safe (F).

For this purpose, it first receives the container (B) at the inlet/outlet (33), then rotates it 180 degrees and allows it to approach the banknote inlet (37) of the receiving safe where, once positioned, pneumatic pressure is applied to the piston (15) of the container (B) by means of the air pressure inlet (35) coming from the compressed air turbine (E) through the outlet pipe (44) which moves along the shaft (12) pushing the banknotes (3) until it deposits them in the receiving safe (F), at which time the sensor (24) detects that all the banknotes (3) have been deposited and the said piston (15) has reached the opposite end which confirms that the banknote content of the same has been completely transferred, closing one part of the cycle.

Then the other part of the cycle takes place, which is the inverse phenomenon, resending the container (B) by means of a reversal of the suction pressure so that once the container (B) has been introduced into the dispenser, the turning motor (36) reverses the container (B) and, also reversing the suction pressure, pulls it out of the dispenser (D) through the inlet/outlet and pushes it to the exit point of the filling station (A) waiting to receive banknotes again.

The internal constitution of the dispenser (D) allows to combine in a single device the ability to manipulate simultaneously the physical movement of the container (B), the direction of the pressure and the suitable pneumatic vacuum due to the opposite situation of the pressure inlets (34) and suction (35) so that the complete sequence is managed in a completely automatic way thanks to the intervention of the electronic control circuit (G) where a microprocessor coordinates the information of the two sensors (23) and (24) located in the two inlet and outlet mouths of the container, The microprocessor (G) coordinates the position of the main rotor and intervenes in the operation of the vacuum/pressure pump and the motor (36) that controls the position of the rotor of the handling module.

The distributor (D) is provided with a connection for the installation of a second pneumatic circuit (25).

Having sufficiently described the nature of the invention, as well as the manner of putting it into practice, it should be noted that the arrangements indicated above and represented in the attached drawings are susceptible to modifications of detail insofar as they do not alter their fundamental principles, set forth in the preceding paragraphs and summarized in the following claims.

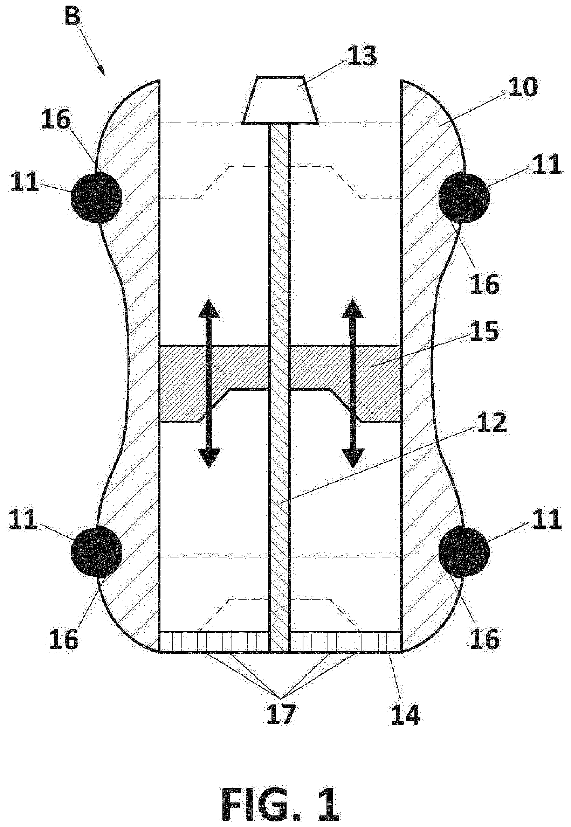

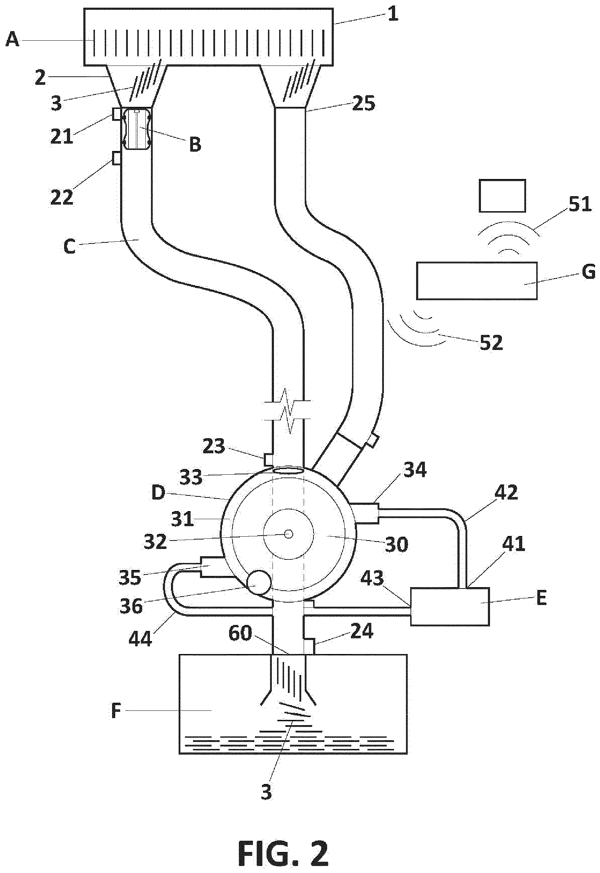

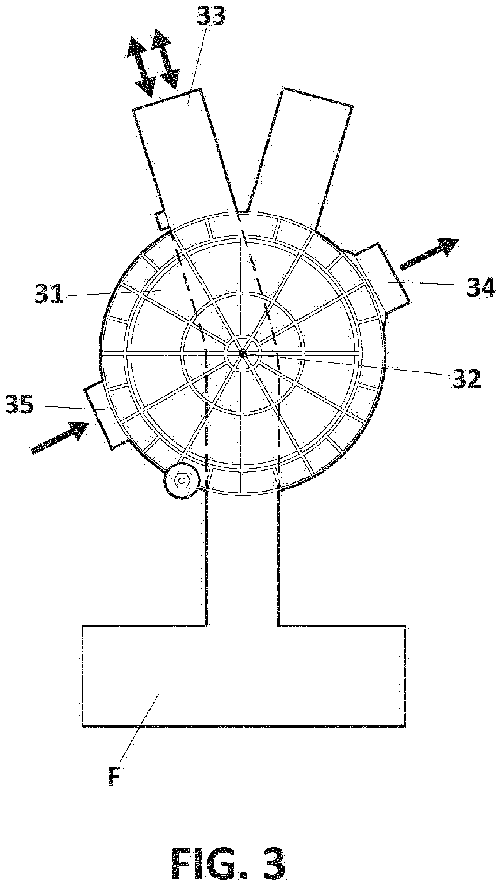

## Claims

1. Procedure and device for the automatic transport of banknotes and documents by pneumatic means, **characterized by** the device being able to be constituted by the following elements:
- (A) - Banknote filling station, consisting of a storage container (1) where all the banknotes (3) to be transported are collected, which has a filling ramp (2) at the bottom in the shape of an inverted cone trunk.
- (B). - Mobile container, consisting of a cylindrical body (10) with straight inner walls and concave-convex-concave outer walls and where at the outer ends of the concave areas there are circular notches (16) that house rubber rings (11) and where on the inside of the body (10) there is a lower lid (14), with air inlets (17) and in the center there is a vertical axis (12) supported on the lower cover (14) and provided with an upper stop (13) and through which runs a mobile cylindrical piston (15) capable of moving longitudinally inside it from end to end, finding the limits in the lower cover (14) and in the upper stop (13); and where the cylindrical body (10) is completely open on its upper part, the entrance and delivery zone of the banknotes (3) while on its opposite part it is closed by the lower cover (14) closed, but with air inlets (17) that allow the free circulation of the air.
- (C) - Pneumatic circuit consisting of a rigid pipe (20) that connects the filling station (A) with the receiving safe (F) and inside it runs the mobile container (B) and also has several motion sensors, which from the filling station are: container arrival sensor (21), container exit sensor (22), arrival/exit sensor to the dispenser (23), banknote discharge sensor (24).
- (D). - Distributor is constituted by a cylindrical body (31) fixed, containing another mobile cylindrical body (30) divided into four independent inner bodies but with pressure/suction outlet/inlet to the pneumatic circuit (C) rotating on a common axis (32) and on whose outer cylindrical part there is an inlet/outlet (33) of the mobile container (B), a suction inlet (34), an air pressure inlet (35), an electric motor (36) for the rotation and positioning of the mobile cylindrical body (30).
- (E) - Compressed air turbine as a conventional compressed air generation device which, depending on the need, expels under pressure or sucks under pressure, by means of a suction inlet (41) and its suction pipe (42), an outlet of the pressure inlet (43) and its pressure pipe (44).
- (F) - Receiving safe consisting of a conventional safe with a circular inlet (60) where the pneumatic circuit (C) ends for the entry of banknotes (3).
(G).- Electronic control circuit that configures the movement and control of all the elements of the equipment by means of two wireless connections, one connection with a bi-directional computer network (51) and another connection with all the control elements of the equipment (52).

2. Procedure and device for the automatic transport of banknotes and documents by pneumatic means, **characterized in that** the procedure and operation of the equipment is as follows:
The banknotes (3) contained in the magazine (1) of the filling unit (A) pass into the mobile container (B) by means of the filling ramp (2), which due to its inverted truncated cone shape causes the banknotes to roll over the axis of the container (B) filling the same and in this situation, the piston (15) of the container (B) is at its lowest point, sticking to the lower lid (14) and achieving the sealing inside the container (B), the rest of the inner cylindrical surface being filled with banknotes (3). When the output sensor (22) detects that the container (B) is full, it sends the corresponding signal to the electronic control circuit (G) which activates the circulation of pressurized air through the pneumatic circuit (C) driving the pneumatic device (B) through the same until it reaches the distributor, It moves inside the distributor due to the air thrust, since it is sealed on the inside by the cylinder (15) that closes the inlets (17) of the cover (14) and on the outside, the rubber rings (11) pressing on the walls of the pneumatic circuit provide the proper sealing and at this point the container (B) is ready to travel through the pneumatic circuit (C) in the direction of its front closed side until it reaches the inlet/outlet (33) of the distributor (D).
The distributor (D) is intended to handle the container (B) so that it can deposit the banknotes (3) contained therein in the receiving safe (F), and for this purpose first receives the container (B), by means of the inlet/outlet (33), then rotates it 180 degrees and allows it to approach the banknote outlet (37) of the receiving safe where it applies pneumatic pressure that actuates on the piston (15) of the container (B) by means of air pressure input (35) coming from the compressed air turbine (E) through the outlet pipe (44) which moves along the shaft (12) pushing the banknotes (3) until it deposits them in the receiving safe (F), at which point the sensor (24) detects that all the banknotes (3) have been deposited and the aforementioned piston (15) has reached the opposite end, which confirms that the banknote content has been completely transferred and whereupon the reverse phenomenon occurs, resending the container (B) by means of a pressure reversal by suction so that once the container (B) has been introduced into the dispenser, the turning motor (36) reverses the pressure of the container (B) by means of a suction pressure reversal, the turning motor (36) reverses the container (B) to take it out of the distributor (D) through the inlet/outlet and pushes it to the outlet point of the filling station (A) waiting to receive tickets again.

3. Procedure and device for the automatic transport of banknotes and documents by pneumatic means according to the previous claims, **characterized in that** the internal constitution of the distributor (D) allows to combine in a single device the capacity to handle simultaneously the physical movement of the container (B), the direction of the pressure and the suitable pneumatic vacuum due to the opposite position of the pressure (34) and suction (35) inlets, so that the complete sequence is managed in a completely automatic way thanks to the intervention of the electronic control circuit (G) where a microprocessor coordinates the information of the two sensors (23) and (24) located on the two inlet and outlet ports of the container, the position of the main rotor and intervene in the operation of the vacuum/pressure pump and the motor (36) that controls the position of the rotor of the handling module.

4. Procedure and device for the automatic transport of banknotes and documents by pneumatic means in accordance with the previous claims and **characterized in that** the distributor (D) has a connection for the installation of a second pneumatic circuit (25).
